# EUROPÄISCHE PATENTSCHRIFT

(11) **EP 3 633 392 B1**
(45) Veröffentlichungstag und Bekanntmachung des Hinweises auf die Patenterteilung: **31.07.2024**
(21) Anmeldenummer: 18198688.6
(22) Anmeldetag: 04.10.2018
(51) Int. Cl.: H04L 43/0829, H04L 43/0823, H04L 41/0816

(54) **KONZEPT ZUR ANALYSE EINES FUNKKOMMUNIKATIONSSYSTEMS**
CONCEPT FOR ANALYSIS OF A RADIO COMMUNICATION SYSTEM
CONCEPT D'ANALYSE D'UN SYSTÈME DE RADIOCOMMUNICATION

(43) Veröffentlichungstag der Anmeldung: 08.04.2020
(73) Patentinhaber: Fraunhofer-Gesellschaft zur Förderung der angewandten Forschung e.V., 80686 München (DE)
(72) Erfinder: WETZKER, Ulf, 01324 Dresden (DE); FROTZSCHER, Andreas, 01097 Dresden (DE); NEUHAUS, Priyanka, 01067 Dresden (DE)
(74) Vertreter: Schenk, Markus

(56) Entgegenhaltungen:
- EP-A1- 2 352 236
- DE-A1- 102004 003 755
- US-B2- 7 978 613

## Beschreibung

Die vorliegende Anmeldung beschäftigt sich mit Konzepten zur Analyse von Funkkommunikationssystemen.

In vielen Bereichen sind Funkkommunikationssysteme allgegenwärtig, wie z. B. in der Industrieautomation zur datentechnischen Anbindung mobiler und beweglicher Subsysteme an übergeordnete Systeme, in großen öffentlichen Bereichen, wie beispielsweise in Bahnhöfen, Flughäfen, Messehallen, Krankenhäusern und vor allem im täglichen Leben von privaten Anwendern. Viele der eingesetzten Funksysteme nutzen lizenzfreie Frequenzbänder, wie z. B. die ISM-Frequenzbänder (Industrial, Scientific and Medical Band) oder die UNII-Frequenzbänder (Unlicensed National Information Infrastructure).

Die Datenübertragung über Funk wird allerdings durch verschiedene Störfaktoren beeinflusst. Beispielsweise durch Pfadverluste, Interferenzen mit anderen Funkknoten oder Störsender, Abschattungseffekte, schneller und langsamer Schwund (engl.: Fading) infolge der Mehrwegeausbreitung und der Bewegung des Senders, Empfängers oder von Objekten in der Umgebung und Hardware- oder Software-Defekte in dem Sende- oder Empfangsknoten.

Zeitliche und räumliche Überlappungen in der Nutzung eines Frequenzbands können zu einer erheblichen Beeinträchtigung der Funkverbindungen führen. Das ist besonders der Fall, wenn das Funkmedium nicht von einer zentralen Instanz koordiniert wird. Die räumliche Verteilung der Netzwerkteilnehmer und möglicher Interferenzquellen verstärkt dieses Problem, da das von einem Funkteilnehmer ausgesendete Signal nur in einer begrenzten räumlichen Entfernung empfangbar ist. Diese Charakteristik führt zu dem bekannten "hidden node problem" und dem "exposed node problem". Hierbei ergeben sich in Abhängigkeit von der Position und anderen Einflussgrößen wie z. B. der Abstrahlcharakteristik der Antenne, Sendeleistung oder Reflexions- und Dämpfungseigenschaften der Umgebung, Situationen, in denen sich die Störeinflüsse innerhalb eines Netzwerks ortsabhängig stark unterscheiden können.

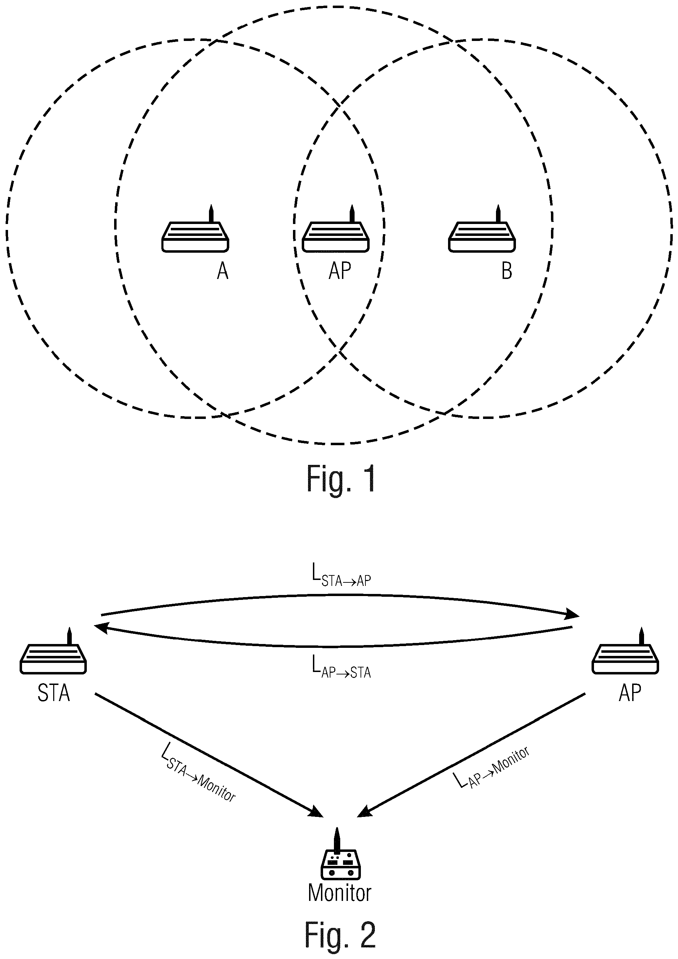

Das Beispiel in Fig. 1 zeigt exemplarisch in einer schematischen Darstellung, wie die Position und Sendeleistung von drei Funkknoten unterschiedliche Interferenzbedingungen in einem Netzwerk hervorrufen können. Hierbei befindet sich der Knoten AP im Einflussbereich des Funkknotens A und des Funkknotens B. Die Funkknoten A und B befinden sich nur im Einflussbereich des Knotens AP, aber nicht im Einflussbereich des jeweils anderen Funkknotens.

Darüber hinaus wird der Empfang eines ausgesendeten Pakets zusätzlich durch gerätespezifische Störungen beeinflusst, wodurch sich auch in sehr dichten Funknetzwerken sehr individuelle Fehlerbilder der einzelnen Knoten ausprägen.

Mobilität der Netzwerkteilnehmer und von Objekten in deren Umgebung, wie z. B. Personen und Fahrzeuge, bedingen in Kombination mit Umwelteinflüssen, wie z. B. Temperaturänderungen und Luftfeuchte-Schwankungen, eine starke zeitliche Abhängigkeit der Verbindungsqualität der einzelnen Funkverbindungen.

Aufgrund dieser räumlichen, zeitlichen und gerätespezifischen Abhängigkeit der Störungen können Aussagen über den Zustand und die Zuverlässigkeit von Funknetzwerken nicht auf Basis der während der Planungsphase durchgeführten Abschätzungen getroffen werden. Die Vielzahl und die Dynamik der oben beschriebenen Einflussfaktoren kann zu sehr großen Abweichungen zwischen dem in der Planungsphase prognostizierten Netzwerk-Zustand und dem realen Zustand des Netzwerks im Lebenszyklus führen.

Aktuell verfügen Funkkomponenten nicht über ausreichende Möglichkeiten zur Überwachung des Zustands der Funkvernetzung, da ihre verfügbaren Hardware-Ressourcen sehr begrenzt sind. Im Falle von Übertragungsstörungen sind die Funkkomponenten nicht in der Lage, die Ursache von Übertragungsstörungen selbständig zu identifizieren und eine korrigierende Reaktion einzuleiten bzw. den Anwender zu informieren.

Externe Überwachungssysteme, welche die erforderlichen Hardware-Ressourcen besitzen, sind als Beobachter wiederum nicht Bestandteil der zu analysierenden Verbindung und sollten diese auch nicht durch aktives Einwirken beeinflussen. Der Einsatz von externen Monitoring-Komponenten bedingt hierbei Unterschiede in den Empfangs- und Störungsbedingungen bezüglich des zu beobachtenden Netzwerks, Diese Unterschiede erschweren und verfälschen gegebenenfalls die Ergebnisse der angestrebten Analysen, wie z. B. Analysen zur Übertragungsqualität, Stabilität, Zuverlässigkeit und Verfügbarkeit aller Funkverbindungen.

Das in Fig. 2 dargestellte Minimalbeispiel zeigt die Kommunikation zwischen einem Zugriffspunkt bzw. Access Point AP und einer Station bzw. Knoten STA. Die Funkkommunikation besteht hierbei aus zwei unidirektionalen Verbindungen (engl.: Links). Auf dem Link L_{AP→STA} sendet der AP Funkpakete, die von der STA empfangen werden. Der Link L_{STA→AP} stellt die Gegenrichtung der Kommunikation dar, bei der Pakete von STA ausgesendet und von AP empfangen werden.

Das Überwachungssystem umfasst in diesem Beispiel einen Monitoring-Knoten bzw. Monitor. In einer realen Anwendung mit mehreren Netzwerkteilnehmern würde das Monitoring-System zur besseren flächigen Abdeckung zumeist mehrere Monitoring-Knoten umfassen.

Die Monitoring-Knoten empfangen Funksignale aus ihrer Umgebung und verarbeiten diese weiter. Die Verarbeitung kann unter anderem in folgende zwei Arten unterschieden werden. Zum einen kann eine Spektralanalyse des Empfangssignals durchgeführt werden. Zum anderen kann das Empfangssignal demoduliert werden, um in den Funkpaketen übertragene digitale Informationen zu extrahieren. Für eine eindeutige Beschreibung werden folgende Bezeichnungen im Weiteren verwendet. Im Ergebnis der Spektralanalyse liegen Spektralinformationen zu jedem empfangenen Funkpaket vor. Nach einer erfolgreichen Demodulation des Empfangssignals liegen die Inhalte der empfangenen Funkpakete, die sogenannten "Paketinhalte", vor. Möglicher Weise liegt auch eine Kombination der Spektralanalyse und der Demodulation vor.

Ein Monitoring-Knoten kann nur die jeweils von dem Funkknoten AP und STA ausgesendeten Funkpakete beobachten. Diese beiden unidirektionalen Verbindungen werden nachfolgend als L_{STA → Monitor} und L_{AP → Monitor} bezeichnet.

Aufgrund der räumlich und zeitlich bedingten bzw. gerätespezifischen Empfangsunterschiede zwischen den Funkknoten AP und STA sowie dem Monitoring-Knoten unterscheiden sich die Empfangssignale an AP, STA und Monitoring-Knoten sehr deutlich voneinander. Das heißt, die Empfangssituationen können stark voneinander abweichen.

Die aus dem Empfangssignal des Monitoring-Knotens extrahierbaren Informationen, wie z. B. Spektralinformationen und Paketinhalte, können sich deutlich von denjenigen der beobachteten Funkverbindungen L_{AP → STA} und L_{STA → AP} unterscheiden.

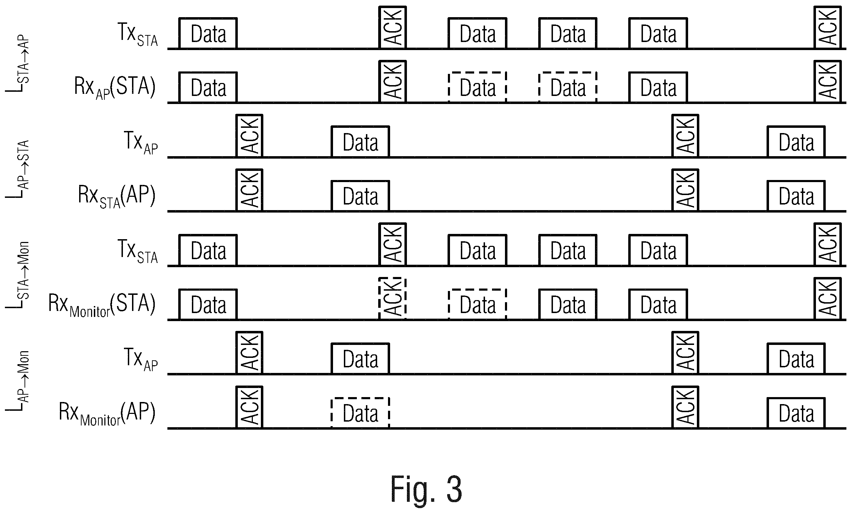

In Fig. 3 sind die einzelnen Verbindungen für das Beispielnetzwerk aus Fig. 2 entsprechend der ausgesendeten und jeweils empfangenen Funkpakete aufgeschlüsselt. Funkpakete, die infolge der verschiedenen Störfaktoren beim Empfänger nicht korrekt demoduliert werden konnten, sind gestrichelt dargestellt. Einige Funkpakete des Knotens AP bzw. des Knotens STA werden von dem gewünschten Empfänger, d. h. STA bzw. AP, nicht korrekt empfangen und als fehlerhaft verworfen, wohingegen der Monitoring-Knoten diese Pakete empfängt. Umgekehrt treten Situationen auf, in denen der eigentliche Empfänger die Pakete korrekt empfängt, aber der Monitoring-Knoten diese Funkpakete nicht erfasst.

Der soeben beschriebene Effekt, der auch als Beobachtungsproblem bezeichnet werden könnte, führt zu einer unvollständigen Datenbasis innerhalb des Monitoring-Systems und somit zu einer möglichen Fehlinterpretation des Verbindungszustands der beobachteten Funkverbindung. Natürlich versucht man, dieses Problem so gering wie möglich ausfallen zu lassen, indem beispielsweise die Position der Monitoring-Knoten entsprechend des maximalen Signal-zu-Rauschabstandes bezüglich des eigentlichen Empfängers gewählt wird, was allerdings nicht immer möglich ist oder zumindest einen großen Aufwand bedeuten kann.

Die EP 2 352 236 A1 beschreibt ein Verfahren zur Reduzierung der interzellulären Störung in Drahtlosnetzwerken. Das Dokument zeigt zwei benachbarte Zellen, in welchen sich zwei Mobilterminals befinden. Das eine Mobilterminal befindet sich in der einen Zelle, das andere in der anderen Zelle. Das Signal des einen Mobilterminals an die Basisstation wird gestört durch das von dem Mobilterminal eigentlich an die andere Basisstation gerichtete Signal. Deshalb schlägt das Dokument vor, eine Messung eines Anteils des von dem anderen Mobilterminal ausgestrahlten von der nicht-adressierten Basisstation zu messen und daraus ein Signal zur Störungskompensation zu extrahieren.

Die Aufgabe der vorliegenden Erfindung besteht deshalb darin, ein Konzept zu schaffen, das eine effektivere Analyse eines Funkkommunikationssystems ermöglicht.

Diese Aufgabe wird durch die Gegenstände der unabhängigen Patentansprüche gelöst.

Ein Kerngedanke der vorliegenden Erfindung besteht darin, dass es möglich ist, eine Analyse eines Funkkommunikationssystems effektiver zu gestalten, wenn die an dem passiven Knoten empfangene Version eines von einem ersten Knoten des Funkkommunikationssystems gesendeten Funksignals noch einer Art Vorverarbeitung unterzogen wird, um nämlich Abweichungen dieser an dem passiven Knoten empfangenen Version von einer Version zu erkennen, die an einem zweiten Knoten empfangen wird, der der eigentliche-Empfänger des gesendeten Funksignals ist, und die erkannten Abweichungen dann zur Erzeugung eines Signals für die Analyse zu verwenden. Zum Beispiel kann das Signal so erzeugt werden, dass es eine Bewertungsbasis als Ersatz für die zweite Version zum Zwecke einer Bewertung einer Kommunikation zwischen dem ersten und dem zweiten Knoten umfasst. Die erkannten Abweichungen können dann verwendet werden, um die von dem passiven Knoten empfangene Version anhand der Abweichungen zu modifizieren und/oder die von dem passiven Knoten empfangene Version mit Zusatzinformationen betreffend die Abweichungen zu versehen, um so die Bewertungsbasis zu erhalten. Letztere kann als Ersatz der von dem tatsächlichen Empfänger empfangenen Version des Funksignals dienen, um daran eine Bewertung der Kommunikation von erstem zu zweitem Knoten durchzuführen, wobei die Bewertungsbasis von der von dem tatsächlichen Empfänger empfangenen Version weniger abweicht als die von dem passiven Knoten empfangene Version oder, anders ausgedrückt, die Bewertungsbasis gegenüber von dem passiven Knoten empfangene Version weniger Bewertungsabweichungen gegenüber einer Bewertung der Kommunikation zwischen den beiden Funkkommunikationssystemknoten anhand der tatsächlich an dem eigentlichen Empfänger des Funksignals empfangenen Version erzeugt als eine Bewertung der Kommunikation unmittelbar anhand der von dem passiven Knoten empfangenen Version. In wiederum anderen Worten ausgedrückt, besteht eine Erkenntnis der vorliegenden Erfindung darin, dass es möglich ist, trotz eines fehlenden Zugriffs auf die ungestörte Version, d. h. das tatsächlich gesendete Funksignal, und auf die Version, wie sie von dem tatsächlichen Empfängerknoten des Funkkommunikationssystems empfangen wird, möglich ist, viele Abweichungen der von dem passiven Knoten empfangenen Version von der Version zu erkennen, die von dem tatsächlichen Empfängerknoten tatsächlich empfangen worden ist. Nicht empfangene Teile in der an dem passiven Knoten empfangenen Version mögen zwar nicht perfekt rekonstruiert werden können, aber eine perfekte Rekonstruktion ist auch entbehrlich, solange es durch die Modifikation bzw. das Versehen mit Zusatzinformationen möglich ist, das Ausmaß zu reduzieren, mit welchem der Nicht-Empfang an dem passiven Knoten eine anschließende Bewertung die Kommunikation zwischen Sendeknoten und Empfangsknoten des Funkkommunikationssystems beeinflusst. Andersherum ist es auch möglich, Teile in der an dem passiven Knoten empfangenen Version zu erkennen, die umgekehrt an dem tatsächlichen Empfängerknoten des Funkkommunikationssystems eigentlich nicht empfangen worden sind, so dass durch Modifikation und/oder Versehen mit Zusatzinformationen der Einfluss solcher Teile in der an dem passiven Knoten empfangenen Version auf eine anschließende Bewertung der Kommunikation zwischen Sendeknoten und Empfangsknoten reduziert werden kann. Entsprechende Betrachtungen gelten auch für Unterschiede bzw. Abweichungen in der an dem passiven Knoten empfangenen Version hinsichtlich Korrektheit des Empfangs im Unterschied zu Empfang oder Nicht-Empfang. Ferner kann das für eine Analyse des Kommunikationsnetzwerkes anhand der erfassten Abweichungen erzeugte Signal zusätzlich oder alternativ eine Bewertung einer Beobachtungsposition des passiven Knotens umfassen. Letztere Bewertung ermöglicht es eine verlässliche Basis für das Aufstellen von passiven Knoten zum Zwecke einer Analyse eines bestehenden Funkkommunikationssystems zu schaffen, wobei die signalisierte Bewertung einer Beobachtungsposition möglicher Weise auch Hinweise zur Verbesserung einer beeinträchtigen Beobachtungsposition enthalten kan.

Weitere Aspekte und Ausgestaltungen sind Gegenstand der beigefügten Patentansprüche. Bevorzugte Ausführungsbeispiele der vorliegenden Anmeldung werden nachfolgend Bezug nehmend auf die Zeichnungen näher erläutert. Es zeigen:
- Fig. 1: ein schematisches Diagramm zur Veranschaulichung räumlich abhängiger Interferenzbedingungen innerhalb eines Funknetzwerks;
- Fig. 2: ein schematisches Diagramm zur Veranschaulichung der Verbindungen bzw. Links zwischen zwei Knoten eines Funkkommunikationsnetzwerks und einem Monitor zur Veranschaulichung einer externen Beobachtung eines Funknetzwerks;
- Fig. 3: eine schematische Darstellung von gesendeten und empfangenen Paketen in den einzelnen Verbindungen bzw. Links in Fig. 2 an dem Beispiel einer Datenpaketübertragung zur Erläuterung einer gerätespezifischen Ausprägung von Empfangsfehlern;
- Fig. 4: eine schematische Darstellung zur Veranschaulichung der Verbindungen bzw. Links zwischen zwei Knoten eines Funkkommunikationsnetzwerks und einem Monitor mit einer Vorrichtung zur Veranschaulichung einer externen Beobachtung und Bewertung eines Funknetzwerks;
- Fig. 5: ein schematisches Blockdiagramm der Datenerfassung und -verarbeitung eines Monitoring-Systems;
- Fig. 6: ein schematisches Blockdiagramm der Datenvorverarbeitung eines Monitoring-Systems; und
- Fig. 7: ein Spektrum und Spektrogramm einer Bluetooth-Verbindung.

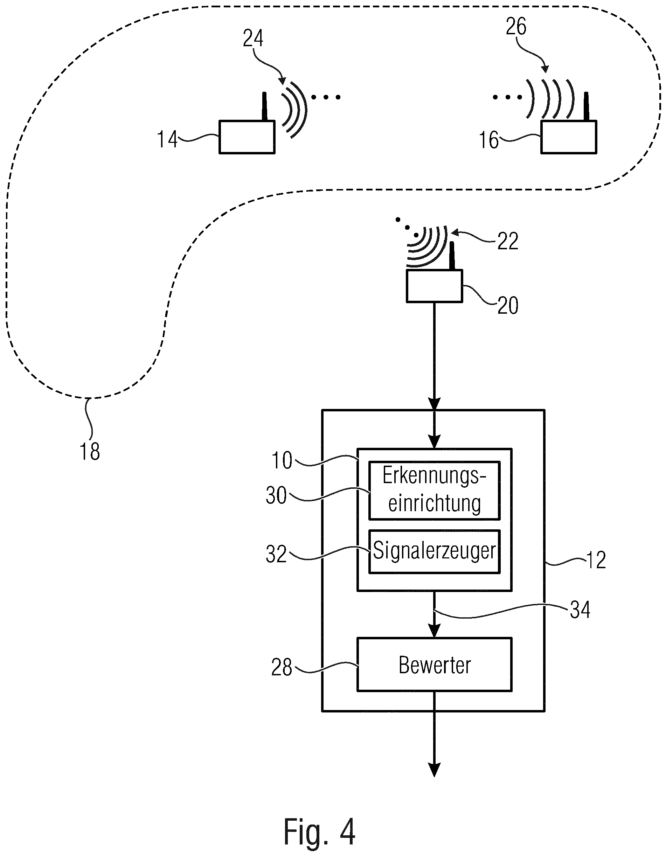

Fig. 4 zeigt einen Ausschnitt aus einem Funkkommunikationssystem, nämlich zwei Knoten daraus, als Beispiel für eine Umgebung, in welcher Ausführungsbeispiele der vorliegenden Erfindung vorteilhaft genutzt werden können. Insbesondere zeigt Fig. 4 ein Ausführungsbeispiel für eine Vorrichtung 10 zum Erzeugen eines Signals für eine Funkkommunikationssystemanalyse anhand einer Auswertung der von einem passiven Knoten empfangenen Version eines Funksignals von einer tatsächlich empfangenen Version eines Empfängerknotens des Funkkommunikationssystems sowie eine diese Vorrichtung beinhaltende bzw. verwendende Vorrichtung 12 zur Bewertung der Kommunikation zwischen Knoten des Funkkommunikationssystems. Das bedeutet beispielsweise, wie es im Folgenden noch deutlich wird, dass die Vorrichtung 10 gemäß manchen Ausführungsbeispielen eine Art Datenvorverarbeitung an der von dem passiven Knoten empfangenen Version des Funksignals durchführt, die zu einer Aufbereitung/Verbesserung der Daten führt, die dann in der Kommunikationsbewertung innerhalb der Vorrichtung 12 verwendet wird.

Fig. 4 zeigt insbesondere einen Sendeknoten 14 und einen Empfangsknoten 16 des Funkkommunikationssystems 18, wobei natürlich darauf hingewiesen wird, dass beide Knoten 14 und 16 möglicherweise Sende/Empfangsknoten sind, die bidirektional miteinander kommunizieren. Insofern bezieht sich die Bezeichnung des Knotens 14 als Sendeknoten und die Bezeichnung des Knotens 16 als Empfangsknoten darauf, dass die Vorrichtung 12 hinsichtlich ihrer Funktionsweise, die im Folgenden beschrieben wird, darauf ausgelegt ist, die Kommunikation von Knoten 14 zu Knoten 16 zu bewerten, wobei allerdings darauf hingewiesen wird, dass die nachfolgende Beschreibung natürlich nicht einschränkend zu verstehen ist, und dass die Vorrichtung 12 natürlich zusätzlich in gleicher Art und Weise, wie sie im Folgenden beschrieben wird, auch die Kommunikation von Knoten 16 zu Knoten 14 bewerten könnte sowie Kommunikationen zwischen anderen Knoten bzw. zu/von anderen Knoten, die das Funkkommunikationssystem 18 möglicherweise noch aufweist.

Fig. 4 zeigt zusätzlich einen passiven Knoten 20. Letzterer Knoten ist in Reichweite zu dem Sendeknoten 14 positioniert. Er "tauscht" quasi mit und empfängt eine Version 22 des Funksignals, das von dem Sender 14 eigentlich an den Empfangsknoten 16 adressiert ist. Die Version 22, die von dem passiven Knoten 20 empfangen wird, kann sich aufgrund von Empfangsverlusten und dergleichen von der tatsächlich ausgesendeten Version 24 des Funksignals unterscheiden. Insbesondere aber kann sich die Version 22, die an dem passiven Knoten 20 empfangen wird, von der Version 26 unterscheiden, die von dem tatsächlichen Adressaten, nämlich dem Knoten 16, empfangen wird.

Die Bewertungsvorrichtung 12 erhält über den passiven Knoten 20 die von letzterem empfangene Version 22 des Funksignals, um eine Bewertung der Kommunikation zwischen Knoten 14 und 16 vorzunehmen bzw. der Kommunikation von Knoten 14 zu Knoten 16. Obwohl Fig. 4 den Fall darstellt, dass die Vorrichtung 12 extern zu dem passiven Knoten 20 angeordnet ist, wäre es aber natürlich ferner möglich, dass die Vorrichtung 12 in dem passiven Knoten 20 integriert ist. Zusätzlich wäre es aber möglich, dass die Vorrichtung 12 mit mehr als einem passiven Knoten 20 gekoppelt ist, worauf im Folgenden noch hingewiesen werden wird.

Die Bewertungsvorrichtung 12 umfasst insbesondere einen Bewerter bzw. eine Einrichtung 28 zum Durchführen der eigentlichen Bewertung der Kommunikation. Wie aber bereits erwähnt, weicht die Version 22, die der passive Knoten 20 empfangen hat, möglicherweise von der Version 26 ab, die der tatsächliche Adressat bzw. Knoten 16 empfangen hat. Zum Ausgleich dieser Abweichungen und zum Bewirken, dass das Ergebnis der von der Einrichtung 28 durchgeführten Bewertung möglichst wenig durch diese Abweichungen beeinträchtigt wird, führt die Vorrichtung 10 eine Vorverarbeitung durch, um ein Signal zu erhalten, dass eine verbesserte Bewertungsbasis enthält. Letztere stellt eine Art Rekonstruktion bzw. rekonstruierte Version der an dem tatsächlichen Adressaten 16 empfangenen Version 26 dar und wird von der Vorrichtung 10 anhand der Version 22 erstellt, die von dem passiven Knoten 20 empfangen worden ist. Hierzu umfasst die Vorrichtung 10 eine Erkennungseinrichtung 30 und einen Signalerzeuger 32. Insbesondere ist es Aufgabe der Erkennungseinrichtung 30 in der Version 22, die von dem passiven Knoten 20 empfangen worden ist, Abweichungen dieser Version von derjenigen zu erkennen, die von dem eigentlichen Empfänger 16 empfangbar ist. Der Signalerzeuger 32 verwendet bzw. erhält diese erkannten Abweichungen und modifiziert die Version 22, um das Signal 34 für die Analyse des Funkkommunikationssystems 18 zu erhalten, das in dem vorliegenden insbesondere eine verbesserte Bewertungsbasis für die anschließende Bewertung in der Einrichtung 28 enthält, nämlich eine rekonstruierte Fassung. Zur Erzeugung der verbesserten Bewertungsbasis unterzieht der Signalerzeuger 32 die Version 22 beispielsweise einer Modifikation zur Kompensation der erkannten Abweichungen und/oder ein Versehen der Version 22 mit Zusatzinformationen betreffend die Abweichungen. Die verbesserte Bewertungsbasis in dem Signal 34 wird an den Bewerter 28 zur Durchführung der Bewertung weitergegeben.

Die verbesserte Bewertungsbasis 34, wie sie aus der Vorrichtung 10 erhalten wird, beeinflusst positiv die Bewertungsgenauigkeit der Bewertungsvorrichtung 12. Wäre Vorrichtung 10 nicht vorhanden, bewertete die Bewertungseinrichtung 28, die an dem passiven Knoten 20 empfangene Version 22 und käme zu einem Bewertungsergebnis, das sich aufgrund der Abweichungen der Version 22 von der von dem tatsächlichen Empfängerknoten 16 erhaltbaren Version 26 von dem Bewertungsergebnis unterschiede, dass sich ergeben würde, würde die Bewertungseinrichtung 28 tatsächlich in der Lage sein, die Kommunikation anhand der Version 26 zu bewerten. Die Vorrichtung 10 bewirkt nun, dass die Bewertungseinrichtung 28 die bewertende Kommunikation an einer rekonstruierten Version bzw. verbesserten Bewertungsbasis durchführt, die gegenüber der an dem passiven Knoten 20 empfangenen Version 22 derart modifiziert und/oder mit Zusatzinformationen versehen ist, dass die erhaltende Bewertung näher an dem liegt, wie sie anhand der tatsächlich empfangbaren Version 26 erhalten worden wäre. Im Folgenden werden Ausführungsbeispiele beschrieben, wie die Erkennung durch die Erkennungseinrichtung 10, und die Modifikationen und/oder das Versehen mit Zusatzinformationen in dem Signalerzeuger 32 durchgeführt werden können, um die verbesserte Bewertungsbasis zu erhalten, die wie soeben erwähnt Bewertungsergebnisabweichungen reduziert.

Bevor mit der Beschreibung von möglichen Details fortgefahren wird, sei noch folgendes erwähnt. Insbesondere sei darauf hingewiesen, dass die Vorrichtung 10 hier zwar im Einsatz innerhalb der Vorrichtung 12 gezeigt ist, die Vorrichtung 10 aber auch möglicher Weise einzeln im Einsatz befindlich bzw. vermarktet werden könnte. Dazu passend sei erwähnt, dass das von der Vorrichtung 10 erzeugte Signal zur Analyse des Funkkommunikationssystems zusätzlich oder alternativ zu der verbesserten Bewertungsbasis bzw. der rekontruierten Fassung des tatsächlichen Empfängersignals eine Bewertung der Beobachtungsposition enthält. Letztere Information könnte von Personal des Betreibers der Bewertungsvorrichtung 12 verwendet werden, um das Platzieren des passiven Knotens zu erleichtern, und/oder könnte von dem Bewerter 28 verwendet werden, um ein von der Vorrichtung 12 ausgegebenes Bewertungsergebnis betreffend das Funkkommunikationssystem mit einer zusätzlichen Information betreffend beispielsweise eine Qualität der Beobachtungsposition abzugeben. Demnach sollen alle Details, die im folgenden zu der Erzeugung der verbesserten Bewertungsbasis anhand der erkannten Abweichungen einerseits und zu der Erzeugung der Bewertung der Beobachtungsposition anhand der erkannten Abweichungen andererseits beschrieben werden, als einzeln oder in Kombination auf die hiesige Beschreibung übertragbar bzw. anwendbar gelten, obwohl zur Vereinfachung nachfolgender Ausführunsbeispiele davon ausgegangen wird, dass das Signal 34 die Bewertung der Beobachtungsposition lediglich optional ggf. zusätzlich zu der verbesserten Bewertungsbasis enthält. Wie hiermit nun erwähnt könnte es sich aus umgekehrt verhalten: Das Signal 34 könnte auch lediglich die Bewertung der Beobachtungsposition enthalten.

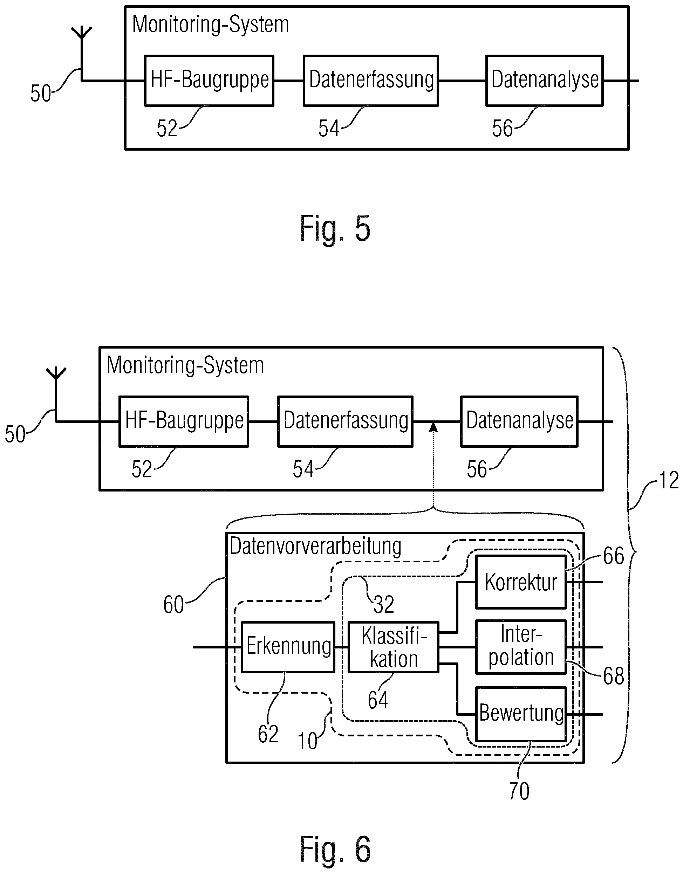

In anderen Worten ausgedrückt, ermöglichen es die Vorrichtungen 10 und 12 durch Fehlererkennung und Datenaufbereitung Fehler in der sich ergebenden Bewertung zu reduzieren, die sich ansonsten aufgrund der Erfassungsprobleme passiver Monitoring-Systeme von Funknetzwerken ergäben. Dazu sei noch einmal kurz auf Fig. 5 Bezug genommen, die das Problem erläutern soll, dass Monitoring-Systeme ansonsten hätten, bzw. haben, die zur passiven Beobachtung von Funksystemen verwendet werden. Fig. 5 zeigt ein Vergleichs-Monitoring-System mit einer Antenne 50 zum passiven Empfang eines Funksignals, d. h. quasi zum Empfang einer Version 22. Das Monitoring-System umfasst intern eine Hintereinanderschaltung folgender Komponenten: eine Hochfrequenzbaugruppe 52 zum Empfang des analogen Antennensignals von der Antenne 50 und Aufbereitung bzw. Verstärkung desselben, gefolgt von einem Datenerfassungsmodul 54, in welchem beispielsweise eine Digitalisierung erfolgen kann, gefolgt von wiederum einem Datenanalysenmodul, welches die eigentliche Bewertung durchführt, d. h. als Bewertungseinrichtung wirkt. Das zu analysierende Funkfrequenzband wird mit Hilfe eines Monitoring-Knotens oder mehrerer vernetzter Monitoring-Knoten (verteiltes System) erfasst. Das Monitoring-System führt eine Analyse der hierbei aufgezeichneten Messdaten durch. Der in Fig. 5 schematisch dargestellte Datenfluss innerhalb des Monitoring-Systems entspricht dem Aufbau eines typischen digitalen Funkempfängers. Das betrachtete Signal wird hierbei von der Antenne 50 empfangen und durchläuft zunächst eine Reihe analoger Hochfrequenzbaugruppen zur Signalaufbereitung, wie z. B. einen Verstärker und/oder einen Filter. Anschließend erfolgt eine Datenerfassung in dem Datenerfassungsmodul 54, wo beispielsweise eine Spektralanalyse oder eine funkstandardspezifische Demodulation stattfindet, möglicherweise inklusive einer Digitalisierung des Signals. Die erfassten Daten werden dann in dem Modul 56 der eigentlichen Analyse unterzogen. Fehler, die durch Abweichungen in der Empfangsposition, d. h. durch eine Abweichung der Position der Antenne 50 von einer entsprechenden Antenne des eigentlichen Empfängerknotens, entstehen, werden in dieser Informationsverarbeitungskette allerdings nicht berücksichtigt. Die verwendeten Hardware- und Software-Komponenten von Fig. 5 sind zumeist für den direkten Einsatz in der Kommunikationsbeziehung vom Sender zum Empfänger konzipiert und beachten die Besonderheiten eines passiven Monitoring-Systems nicht. Dies stellt einen erheblichen Nachteil für die automatisierte Datenanalyse dar, da fehlende oder zusätzliche Informationen in der Datenbasis die Ergebnisse der nachfolgenden Algorithmen verfälschen oder deren Aussage verschlechtern.

In anderen Worten ausgedrückt, würde das in Fig. 5 dargestellte Monitoring-System in Fig. 4 anstelle der Kombination aus passivem Knoten 20 und Vorrichtung 12 verwendet werden, ergäbe sich genau die schon bezüglich Fig. 4 beschriebene Beeinträchtigung des Bewertungsergebnisses aufgrund der Abweichungen der Fassung 22 von der eigentlich zu bewertenden Fassung 26.

Ausführungsbeispiele der vorliegenden Anmeldung verwenden deshalb eine Erkennung und Auswertung von Abweichungen innerhalb der erfassten Messdaten, d. h. innerhalb der an dem passiven Knoten 20 empfangenen Version 22, welche aufgrund der Position des Monitoring-Systems entstehen bzw. aufgrund der Lageabweichung des passiven Knotens 20 von dem eigentlichen Empfängerknoten 16. Fig. 6 zeigt eine Implementierungsmöglichkeit bezüglich Fig. 4 bzw. ein detaillierteres Ausführungsbeispiel der vorliegenden Anmeldung als eine Ergänzung des Monitoring-Systems von Fig. 5 um ein Datenvorverarbeitungsmodul, das zwischen das Datenerfassungsmodul 54 und das Datenanalysemodul 56 geschaltet ist und mit dem Bezugszeichen 60 versehen ist. Das Datenvorverarbeitungsmodul 60 stellt ein Ausführungsbeispiel für die Vorrichtung 10 von Fig. 4 dar, während das Datenanalysemodul 56 der Bewertungseinrichtung 28 von Fig. 4 entspricht bzw. als Implementierungsbeispiel hierfür dient. Das Monitoring-System von Fig. 5 bildet somit ein Implementierungsbeispiel für die Bewertungsvorrichtung 12 von Fig. 4. Das Datenanalysemodul 56 aus Fig. 6 weicht von demjenigen aus Fig. 5 möglicherweise hinsichtlich seiner Fähigkeit ab, die Zusatzinformationen zu verwenden, die gegebenenfalls von dem Datenvorverarbeitungsmodul 60 erzeugt werden, um auf Abweichungen von der tatsächlich an dem Empfängerknoten 16 empfangbaren Fassung/Version 26 aufmerksam zu machen.

Im Folgenden werden nun Details bzw. mögliche Implementierungsbeispiele für die Vorverarbeitung in der Vorrichtung 10 und die Bewertung in der Bewertungsvorrichtung 12 vor dem Hintergrund des Ausführungsbeispiels von Fig. 6 beschrieben, bei der wie erwähnt das Datenvorverarbeitungsmodul 60 als Vorverarbeitungsvorrichtung 10 fungiert und das gesamte Monitoring-System als die Bewertungsvorrichtung 12, aber all diese Details sollen natürlich auch unmittelbar auf die Beschreibung von Fig. 4 übertragbar verstanden sein.

Bevor auf die Details eingegangen wird, wird darauf hingewiesen, dass ähnlich wie schon bezüglich Fig. 4 erwähnt, die durch das Monitoring-System von Fig. 6 durchgeführte Analyse direkt auf einer Hardware des passiven Knotens, d. h. an Ort und Stelle des Empfangs der Version 22, oder aber jenseits davon, beispielsweise auf einem zentralen Server, durchgeführt werden könnten. Zudem sei darauf hingewiesen, dass die gesamte Bewertung durch das Monitoring-System bzw. die Bewertungsvorrichtung 12 live bzw. in Echtzeit bzw. Realtime oder mittels Streaming-Analysis durchgeführt werden könnten, oder alternativ die Analyse auch offline stattfinden könnte, wie z. B. durch Aufzeichnung der Version 22 und Auswertung derselben zu einem späteren Zeitpunkt.

Mit der Beschreibung von Fig. 6 fortfahrend wird deutlich, dass die Integration des Datenvorverarbeitungsmoduls 60 und dessen Funktionsweise in das Monitoring-System möglicherweise vollständig transparent in ein bestehendes Monitoring-System vorgenommen werden könnte, wie es beispielsweise in Fig. 5 gezeigt ist. Aber wie gesagt, ist es auch möglich, dass das Datenanalysemodul 56, das ja als die Bewertungseinrichtung 28 agiert, zu einer Verbesserung der erhaltenen Analyseergebnisse von der Datenvorverarbeitung 60 gewonnene Informationen bezüglich der positionsbedingten Empfangsfehler in seine Datenanalyse bzw. die Bewertung miteinbezieht.

Die durch das Modul 60 vorgenommene Datenvorverarbeitung ist möglicherweise an den vorherigen Prozess der Datenerfassung in dem Modul 54 gebunden, weshalb es vorteilhaft sei, die Datenvorverarbeitungsschritte an dem Prozess der Datenerfassung anzupassen bzw. ihn darauf zuzuschneiden. Je nach Art der erfassten Daten bzw. Typ des Funckommunikationssystems 18 ergeben sich möglicherweise Unterschiede in den der Datenvorverarbeitung des Moduls 60 zugrunde liegenden Algorithmen. Beispielsweise können die in der Spektralanalyse erfassten Messwerte innerhalb einer Fehlererkennung oder - korrektur algorithmisch anders verarbeitet werden als demodulierte Pakete eines Funkprotokolls. Die Struktur der einzelnen Verarbeitungsschritte innerhalb des beschriebenen Verfahrens bleiben aber unabhängig von der Datenerfassung und des betrachteten Funkstandards gleich.

Bevor mit der Beschreibung fortgeführt wird, sei auf die interne Struktur des Datenvorverarbeitungsmoduls 60 von Fig. 6 eingegangen. Das Datenvorverarbeitungsmodul 60 umfasst ein Erkennungsmodul 62, das der Erkennungseinrichtung 30 entspricht bzw. als Implementierungsbeispiel hierfür dient. Ferner umfasst das Datenvorverarbeitungsmodul 60 von Fig. 6 einen Klassifizierer 64 zum Klassifizieren erkannter Abweichungen durch die Erkennungseinrichtung 62, sowie ein Korrekturmodul 66 zum Korrigieren von Anteilen, die einen passiven Knoten 20 empfangenen Version 22, die an dem passiven Knoten 20 zwar empfangen wurden, wohl aber als inkorrekt empfangen erkannt worden sind, während sie in dem an dem eigentlichen Empfängerknoten empfangenen Signal 26 korrekt erhalten worden sind, sowie ein Interpolationsmodul 68 zur Einfügung von Anteilen in der an dem passiven Knoten empfangenen Version 22, die von der Erkennung 62 als solche identifiziert worden sind, die in der Version 22 fehlen, obwohl sie in der Version 26 wohl enthalten sind.

Darüber hinaus weist das Datenvorverarbeitungsmodul 60 von Fig. 6 noch ein Modul 70 auf, das dazu vorgesehen ist, für den Anwender des Monitoring-Systems bzw. der Bewertungsvorrichtung 12 eine Bewertung darüber abzugeben, ob die Aufstellposition des passiven Knotens 20 für die Bewertungsaufgabe geeignet ist oder ob eventuelle Änderungen an der gegenwärtigen Monitoring-Konfiguration durchgeführt werden sollten.

Die einzelnen Aufgaben der Module 62-70 im Inneren des Datenvorverarbeitungsmoduls 60 werden im Folgenden näher erläutert. Wie bereits erwähnt, sind all diese Details mögliche Implementierungsbeispiele für die Einrichtungen 30 und 32 bzw. 10 und 12 aus Fig. 4. Insbesondere übernehmen dabei die Module 64, 66, 68 und 70 die Aufgabe des Signalerzeugers 30 aus Fig. 4, d. h. sie dienen als Implementierungsbeispiel für letzteren, wobei die Module 64, 66, 68 eine Modifikation des an dem passiven Knoten 22 erhaltenen Signals 22 anhand der erkannten Abweichungen und/oder ein Versehen derselben mit Zusatzinformationen betreffend die Abweichungen durchführen und Modul 70 eine Positionsbewertung des passiven Knotens, wobei wieder auf obige Bemerkung bzgl. Fig. 4 hinsichtlich der Möglichkeit hingewiesen wird, dass der Signalerzeuger 32 lediglich die Positionsbewertung ohne die Bewertungsbasiserzeugung durchführt oder umgekehrt.

In der Erkennungseinrichtung 62 werden die von der Datenerfassung 54 des passiven Knotens 20 zur Verfügung gestellten Messwerte nach auffälligen Mustern untersucht, die z. B. auf eine positionsbedingte Abweichung entsprechend des Beobachtungsproblems hindeuten. Die Charakteristik der Messdaten des passiven Knotens 20 in Fig. 4 bestimmt den Algorithmus des Erkennungsverfahrens der Erkennungseinrichtung 30 in Fig. 4 bzw. 62 in Fig. 6 und gibt vor, ob die Erkennung beispielweise pro Datum durchgeführt werden kann oder z. B. eine Historie von Messdaten zur Verfügung gestellt werden soll. Die Datenerfassung 54 in Fig. 6 kann die Messwerte in Form eines Live-Systems in Echtzeit aufnehmen oder diese als Aufzeichnung aus einer Datenbank oder Datei zur Verfügung stellen.

Das nächste Modul 64 klassifiziert und markiert die von der Erkennungseinrichtung 10 aus Fig. 4 bzw. 62 aus Fig. 6 erkannten Abweichungen. Sobald eine Abweichung erkannt wurde, wird dies gekennzeichnet und somit nachfolgenden Modulen, wie z. B. dem Korrekturmodul 66, Interpolationsmodul 68, Bewertungsmodul 70 mitgeteilt. Neben der Existenz einer Anomalie können dem vorhergehenden Stück der Erkennung 62 bzw. 30 aus Fig. 4 der positionsbedingten Abweichung noch weitere Informationen entnommen werden, welche eine Klassifizierung vom Klassifikationsmodul 64 zulassen. Mögliche Klassen können hierbei die Abweichungsart, wie z. B. fehlende oder zusätzliche Pakete, Häufigkeit, wie z. B. Einzelabweichung oder "burst", oder die Ursache entsprechend der Erkennungsmerkmale, wie z. B. Paketkollision, Dämpfung oder Signalverzerrung, sein. Die "Markierung" der Abweichungen von den Originalmessdaten 24 aus Fig. 4, gesendet von dem ersten Knoten 14 und den "Klassifikationen" gemäß der Abweichungsart, werden der internen Kommunikation des Monitoring-Systems hinzugefügt und unterliegen keinen speziellen Anforderungen.

Die nachfolgenden Module, wie z. B. Korrektionsmodul 66 und Interpolationsmodul 68, können eine Modifikation des an dem passiven Knoten 20 erhaltenden Signals 22 anhand der Klassifizierung bzw. Markierung durchführen.

Die von dem Erkennungsmodul 62 als fehlerhaft erkannten Messwerte können zum Teil durch eine vollständige oder partielle Korrektur den relevanten Informationen der Datenbasis für die folgenden Analysen hinzugefügt werden. Mit der Hilfe des Korrekturmoduls 66 können die Effekte des Beobachtungsproblems teilweise ausgeglichen werden. Die Korrektur bezieht sich hierbei nicht zwangsläufig auf alle Informationen innerhalb eines Messwerts, sondern konzentriert sich auf die für die nachfolgenden Analysen relevanten Informationen. Wie bei der anfänglichen Erkennung der Fehler, profitiert eine partielle oder vollständige Korrektur häufig von der Betrachtung einer Historie an Messwerten und erzielt hierbei ein besseres Ergebnis. In anderen Worten ausgedrückt kann das Korrekturmodul 66 z. B. an dem von dem passiven Knoten 20 erhaltenen Signal 22 an Stellen, die von dem Klassifizierer 64 als verglichen zu der Fassung 26 fehlerhaft markiert sind, eine partielle Korrektur durchführen, bei der nur oder primär nur die Paketheader (packet header) korrigiert werden und die Nutzdaten eine sekundäre Rolle einnehmen und möglicher Weise belassen werden.

Eine weitere Modifikationsmöglichkeit bietet das Interpolationsmodul 68 an. Die Interpolation von den als fehlend klassifizierten an dem passiven Knoten 20 erhaltenen Messwerten stellt einen weiteren Weg zur Verbesserung der Datenbasis dar. Starke Störungen oder schlechte Empfangsbedingungen zwischen dem ersten Knoten des Funkkommunikationssystems und dem passiven Knoten 20 aus Fig. 4 können dazu führen, dass Nachrichten der beobachteten Verbindung zwischen dem ersten und dem zweiten Knoten des Funkkommunikationssystems nicht erkannt werden und verlorengehen. Ziel ist es, hierbei eine möglichst originaltreue Darstellung der beobachteten Verbindung zwischen dem ersten und dem zweiten Knoten des Funkkommunikationssystems zu erreichen. Wurde eine Lücke innerhalb der Verbindungsinformationen an dem passiven Knoten 20 erkannt, ist es möglich, einen Teil der für folgende Analysen notwendigen Informationen über den bisherigen Verlauf der an dem passiven Knoten 20 aus Fig. 4 erfassten Messwerte zu ermitteln. Diese hierbei gewonnenen Informationen besitzen im Gegensatz zu den Ergebnissen der Korrektur des Korrekturmoduls 66 keinen festen Zeitpunkt, da dieser aufgrund der ungünstigen Empfangsbedingungen nicht bestimmt werden konnte. Vielmehr wird den interpolierten Werten ein Zeitintervall zugeordnet. Die Ergebnisse einer Interpolation des Interpolationsmoduls 68 können in Abhängigkeit der Anzahl an nicht erfassten Messwerten, konkreten Werten, wie z. B. Adresse des Senders und Empfängers einer Nachricht, oder statistischen Kenngrößen, wie z. B. Minimum, Maximum und Schätzwert an übertragenen Nachrichten, entsprechen. In anderen Worten, das Interpolationsmodul 68 kann die fehlenden Messwerte des an dem passiven Knoten 20 erhaltenen Signals 22 aus Fig. 4 anhand vorhandener Informationen, wie z. B. der Anzahl von nicht erfassten Messwerten, Adresse des Senders/Empfängers, teilweise, wie z. B. das Paketheader, wiederherstellen.

Neben der Verbesserung der Datenbasis ist die Bewertung der Beobachtungsposition ein weiterer wichtiger Bestandteil der Datenvorverarbeitung. Das Bewertungsmodul 70 gibt dem Benutzer Informationen über die Vollständigkeit der Messwerte in Bezug auf den beobachteten Datenaustausch zwischen dem ersten Knoten und dem zweiten Knoten 16 des Funkkommunikationssystems 18. Eine automatisierte Bewertung der Beobachtungsposition sowie eine Auswertung der innerhalb der Klassifikation ermittelten Art einer erkannten Abweichung stellen hierbei die Grundlage für eine erforderliche Handlungsanweisung, wie z. B. einen Positionswechsel, die Wahl einer Antenne mit einer anderen Richtcharakteristik oder eine höhere Anzahl an Monitoring-Knoten, dar.

Es ist möglich und zum Teil auch sinnvoll, wie z. B. bei einer Software, die einzelnen Verfahrensschritte der Vorrichtung 12 parallel durchzuführen und eine gegenseitigen Informationsaustausch zu integrieren. Die vorgegebene Abfolge ist daher nicht zwangsläufig als starr anzusehen und eine starke Kopplung der einzelnen Algorithmen kann zu einer verbesserten Leistungsfähigkeit führen. Des Weiteren ist es möglich, dass das bestimmte Messverfahren und die Charakteristik der Messdaten des an dem passiven Knoten 20 erhaltenen Signals 22 eine Korrektur der Messdaten unmöglich machen.

Zusammenfassend besteht der Mehrgewinn des beschriebenen Verfahrens in der Minimierung der Monitoring-Knoten 20 aus Fig. 4, die für eine passive Beobachtung eines Funknetzwerks 18 eingesetzt werden. Um dies zu erreichen, kann die Vorrichtung 12 aufgrund der externen Beobachtungsposition auftretende Probleme (Beobachtungsprobleme) erkennen und kompensieren. Die beschriebene Vorrichtung 12 umfasst folgende Punkte, um dies umzusetzen:
1. Die an dem passiven Knoten 20 erfassten Messwerte des empfangenen Signals 22 werden nach Abweichung von einer regelgerechten Kommunikation zweier Funkknoten 14 und 16 aus Fig. 4 mit der Hilfe des Erkennungsmoduls 62 aus Fig. 6 untersucht. Diese Erkennung der positionsbedingten Abweichungen wird in der Regel musterbasiert auf Spektraldaten und/oder demodulierten Daten, bzw. Funkpaketen, vorgenommen.
2. Die vom Erkennungsmodul 30 oder 62 erkannten Abweichungen werden von dem Klassifikationsmodul 64 als solche markiert und entsprechend ihren charakteristischen Merkmalen klassifiziert. Dieser Schritt verstärkt den Informationsgehalt und fördert auf diese Weise die Kompensation der von dem Erkennungsmodul 30 oder 62 erkannten Abweichungen.
3. Um die erkannte Abweichung auszugleichen, wird je nach Art des Problems einer der folgenden Schritte angewendet:
   a) das Korrekturmodul 66 versucht die als inkonsistent oder fehlerhaft empfangenen Daten auszugleichen.
   b) nicht-empfangene und als fehlend erkannte Daten können durch eine Interpolation des Interpolationsmoduls 68 rekonstruiert werden.
4. Basierend auf den von dem Erkennungsmodul 30 oder 62 erkannten Abweichungen ergänzt von den Resultaten des Korrekturmoduls 66 und der Interpolation des Interpolationsmoduls 68 wird eine Bewertung der aktuellen Beobachtungsposition des passiven Knotens 20 aus Fig. 4 von dem Bewertungsmodul 70 durchgeführt. Hierbei werden die Auswirkungen der Beobachtungsposition des passiven Knotens 20 in Bezug auf die weiterführenden Analysen, wie z. B. Zustandsanalysen, Ursachenanalysen oder Link-Qualitätsanalysen, abgeschätzt, um dem Anwender gegebenenfalls eine Handlungsanreizung zu geben.

Im Folgenden werden mögliche Details obiger Ausführungsbeispiele für den Fall erläutert, dass das Funkkommunikationssystem 18 ein WLAN-Netzwerk ist und eine Demodulation in dem Signalempfang der beteiligten Knoten umfasst und somit auch in dem passiven Knoten.

Insbesondere wird nun erläutert, wie die oben beschriebenen Ausführungsbeispiele im Zusammenhang mit einem Funksystem verwendet werden können, das ein bestimmtes Protokoll verwendet. Innerhalb einer Protokollanalyse werden dabei beispielsweise bereits demodulierte Funkpakete eines Empfangssignals ausgewertet. Anders ausgedrückt erhält die Datenvorverarbeitung 60 bzw. 10 beispielsweise solche bereits demodulierten Funkpakete. Für einen solchen Fall können für die HF-Baugruppe 52 und die Datenerfassung 54 beispielsweise WLAN-, ZigBee-, LoRa- usw. -Empfängerkarten eingesetzt werden. Die nachfolgenden Ausführungen können insbesondere verwendet werden, wenn für das Funksystem 18 ein WLAN-Netzwerk wie z. B. des Typs IEEE 802.11 einer Beobachtung unterzogen wird bzw. einer Bewertung, wobei diese Bezugnahmen allerdings lediglich exemplarisch zu verstehen sind und auch auf andere Netzwerkprotokolle übertragbar sind.

Die bereits demodulierten Funkpakete eines Empfangssignals 22 werden innerhalb einer Protokollanalyse ausgewertet. Passive Protokollanalysesysteme für WLAN bestehen aus mindestens einem WLAN-Empfänger 50 aus Fig. 5, welcher sich im "Monitoring"- bzw. "promiscuous"-Mode befindet. Dies ermöglicht, den aus WLAN-Sniffer bezeichneten passiven Knoten 20, alle in seiner Empfangsreichweite ausgesandten WLAN-Funkpakete zu empfangen. Eingeschränkt wird diese Datenerfassung von WLAN-Sniffer durch die eingestellten Parameter der WLAN-Karte, wie z. B. Frequenz und Bandbreite des Übertragungskanals, und der Empfangseigenschaften der Antenne 50. Ist das Signal-RauschVerhältnis, wie z. B. durch starke Signaldämpfung, einem lokalen Störer oder gerätespezifischen Empfangsproblemen, im Monitoring-Knoten 22 zu gering, kommt es ungeachtet der umfassenden Schutzmechanismen der physikalischen Übertragungsschicht zu Übertragungsfehlern. Wird das Paket nicht empfangen oder bereits sehr frühzeitig verworfen, so kann dies anhand der Abfolge der enthaltenen Sequenznummern als Abweichung erkannt werden. Ausbleibende Pakete, die keine Sequenznummern verwenden, z. B. ACK, RTS, CTS, usw., können über eine Prüfung der logischen Paketabfolge, wie z. B. Regelverletzung einer aufgestellten Grammatik oder erweiterte Zustandsdiagramme für einen Protokoll-Stack, von der Erkennungseinrichtung 30 erkannt werden. Wird ein gestörtes Signal 22 von der physikalischen Übertragungsschicht verarbeitet und an die MAC-Schicht weitergegeben, so können diese Daten weiterhin Fehler enthalten. Zur Erkennung dieser Bitfehler wird das im Rahmen einer WLAN-Datenübertragung verwendete Prüfverfahren angewendet. Hierbei wird kontrolliert, ob die im Paket enthaltene Prüfsumme mit der für an dem passiven Knoten 20 empfangenen Daten berechneten übereinstimmt. Die Erkennung der Erkennungseinrichtung 30 über eine der beschriebenen Methoden beinhaltet zusätzliche Informationen zur Klassifikation der Abweichung der Paketabfolge. Die Klassifikation wird von dem Klassifikationsmodul 64 in dem Signalerzeuger 32 durchgeführt. Die Anzahl der aufeinanderfolgenden Abweichungen ermöglicht beispielsweise eine Einteilung in Einzelpaketfehler oder Burst-Fehler bzw. Paketfolgen-Fehler. Andere Muster innerhalb der von der Erkennungseinrichtung 30 erkannten Abweichungen, wie beispielsweise eine asymmetrische Konzentration von fehlenden Paketen eines Kommunikationspartners bzw. des zweiten Knotens, können zur weiteren Gruppierung der Daten verwendet werden. Im nächsten Schritt werden fehlerhaft empfangene Pakete partiell oder vollständig von dem Korrekturmodul 66 dem Signalerzeuger 32 korrigiert. Als Grundlage für eine Korrektur wird hierbei zumeist auf die Historie der fehlerfrei empfangenen Pakete zurückgegriffen. Techniken wie Fuzzy-Matching, Hidden Markov Models, Distanzmetriken zu bekannten Informationen oder eine Überprüfung logischer Abfolgen innerhalb der verwendeten Protokolle bieten eine gute Wiederherstellungsmöglichkeit der für folgende Analysen erforderlichen Meta-Informationen. Eine Interpolation von dem Interpolationsmodul 68 in dem Signalerzeuger 32 wird notwendig, wenn ein Paket verworfen oder nicht empfangen wurde. Da im Gegensatz zu einer Korrektur an dieser Stelle keine Datenfragmente und auch kein exakter Empfangszeitpunkt zur Verfügung stehen, werden die Informationen anhand der Pakethistorie mit einer stärkeren Unschärfe von dem Interpolationsmodul 68 in dem Signalerzeuger 32 ergänzt. Bei längeren Lücken im Empfang werden die Techniken für eine Interpolation durch die Erkennung von Paketmustern und statistischen Modellen erweitert. Zur Bewertung der aktuellen Beobachtungsposition können die Lücken und charakteristischen Muster in den Sequenznummern, die Anzahl der nicht interpolierbaren bzw. korrigierbaren Informationen, sowie der statistische Verlauf der Signalstärke verwendet werden. Die Bewertung der aktuellen Beobachtungsposition wird durch die Bewertungseinrichtung 70 durchgeführt. Eine Positionsbewertung ist besonders wichtig, wenn die Korrektur und Interpolation aufgrund von Empfangsproblemen keine Verbesserung der Datenbasis mehr ermöglicht. Die betrachteten Verbindungen können in diesem Fall als nicht auswertbar markiert werden. Über eine musterbasierte Ursachenanalyse können dem Benutzer zusätzlich noch weitere Handlungsanweisungen zur Verbesserung des Monitoring-Systems gegeben werden.

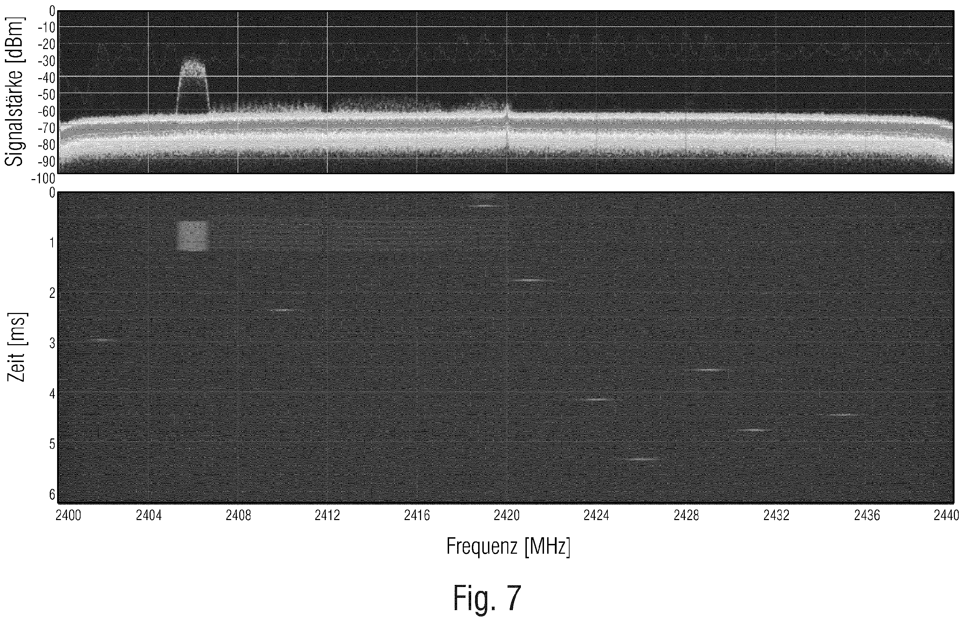

In dem folgenden Ausführungsbeispiel wird der Frequenzbereich eines empfangenen Signals 22 mittels Spektralanalyse analysiert. In Bezug auf den schematischen Aufbau eines Monitoring-Knotens 20 werden für die HF-Baugruppe 52 und Datenverarbeitung häufig echtzeitfähige Spektralanalysatoren auf Basis eines SDR bzw. "software defined radio" verwendet. Das betrachtete Frequenzband wird hierbei von der HF-Baugruppe im Zeitbereich aufgenommen und in der Datenverarbeitung bzw. Datenerfassung 54 digitalisiert, sowie über einen FPGA mittels digitaler Signalverarbeitung bzw. Datenerfassung 54 in den Frequenzbereich transformiert. Das Ergebnis dieser Transformation stellt die Energie bzw. Amplitude für den jeweiligen Frequenzanteil des Signals, wie es in Fig. 7 zu sehen ist, dar. Um jedes übertragene Datenpaket zu erkennen, muss die Erfassung im Zeitbereich mit einer sehr hohen Abtastrate durchgeführt werden. Zur Reduktion der hierbei anfallenden Datenmengen werden über eine Mustererkennung, wie z. B. Signalform über Bandbreite und Dauer, die charakteristischen Eigenschaften der einzelnen Funksysteme bzw. Knoten des Funkkommunikationssystems 18 und Interferenzquellen erkannt. Weiteren Analysen werden somit abstrakte Spektralinformationen zur Verfügung gestellt, was die Hardware-Anforderungen der folgenden Verarbeitungseinheiten stark reduziert. Abweichungen von den funkstandardspezifischen Mustern werden als unbekannte Interferenzquelle von der Erkennungseinrichtung 30 gewertet. Signalabweichungen entstehen aber auch aufgrund der passiven Beobachtung einer Funkverbindung zwischen dem ersten und dem zweiten Knoten 14 und 16 des Funkkommunikationssystems 18. Die Erkennung der positionsbedingten Abweichungen von der Erkennungseinrichtung 30 bezieht sich bei der Spektralanalyse somit zumeist auf die nicht klassifizierbaren Signale. Funkstandardspezifische Muster, wie z. B. die Bandbreite eines Signals, können beispielsweise durch eine stärkere Signaldämpfung nicht mehr korrekt zugeordnet werden, d. h. nur die Spitze des Signals ragt aus dem Rauschteppich hervor. Auch eine zu hohe Verstärkung innerhalb der HF-Baugruppe 52 führt bei starken Signalen zu einer Übersteuerungund damit zu untypischen Verzerrungen. Das Verwenden einer automatischen Aussteuerung des Empfangsverstärkers (automatic gain control) verbessert hierbei den Empfang der leistungsstarken Signale benachbarter Funkknoten, unterdrückt aber gleichzeitig die Signale entfernterer Knoten. Die Erkennung von Abweichungen erweitert dabei die Funktionalität der Mustererkennung um die Identifikation von dämpfungs- und verzerrungsspezifischen Merkmalen. Die Klassifikation in dem Klassifikationsmodul 64 des Signalerzeugers 32 verwendet diese Informationen und bestimmt zusätzlich die Dauer und die Häufigkeit der Abweichungen. Darüber hinaus wird mit einer statistischen Betrachtung der Empfangsstärke eine grobe Zuordnung der an dem passiven Knoten 20 empfangenen Signale entsprechend der Anzahl an Sendeknoten in dem Funkkommunikationssystem 18 vorgenommen. Kommunikationsbeziehungen werden mit einer gewissen Unschärfe über eine Langzeitbetrachtung der Signalabfolge bestimmt und bieten die Grundlage für eine Erkennung von asymmetrischen Empfangsbedingungen. Je nach Art der Abweichung wird eine Korrektur von dem Korrekturmodul 66 in dem Signalerzeuger 32 des nicht eindeutig zuordenbaren Signals vorgenommen. Der Einfluss einer Signaldämpfung bzw. Signalverzerrung wird hierbei von der Vorverarbeitungsvorrichtung 10 rekonstruiert und eine Anpassung des Empfangssignals 22 bzw. der Detektionsmuster vorgenommen. Zusätzlich können über die charakteristischen Signallängen innerhalb der Historie an Messdaten eine Grammatik oder ein Zustandsdiagramm für protokollspezifische Sequenzen erstellt werden. Diese Grammatiken oder Zustandsdiagramme unterstützen die Korrektur von teilweise empfangenen Signalen und ermöglichen eine Interpolation von dem Interpolationsmodul 68 in dem Signalerzeuger 32 bei starken Empfangsstörungen oder - ausfällen. Eine Bewertung der aktuellen Beobachtungsposition von der Bewertungseinrichtung 70 des Signalerzeugers 32 wird mit Hilfe des statistischen Verlaufs der Signalstärke und der Anzahl an nicht interpolierbaren bzw. korrigierbaren Signalen durchgeführt. Über eine musterbasierte Ursachenanalyse können dem Benutzer Handlungsanweisungen zur Verbesserung des Monitoring-Systems gegeben werden.

Mit den oben beschriebenen Ausführungsbeispielen sind unterschiedliche Vorteile möglich. Im Folgenden soll auf einige dieser Vorteile noch einmal gesondert eingegangen werden.

Beispielsweise ermöglichen obige Ausführungsbeispiele eine Ausführung mit einer automatisierten Erkennung positionsbedingter Abweichungen. Wie es oben beschrieben worden ist, können charakteristische Muster der positionsbedingten Abweichungen, d. h. der Abweichungen des an dem passiven Knoten empfangenen Signals von derjenigen Version, die von dem tatsächlichen Empfängerknoten empfangen worden ist, automatisch innerhalb der an dem passiven Knoten erfassten Daten erkannt werden. Sie können markiert und klassifiziert werden. Die Ergebnisse ermöglichen eine weitere Berücksichtigung der erkannten Abweichungen in der darauffolgenden Analyse, welche möglicherweise auch manuell durch den Anwender erfolgen könnte. Oben wurde eine automatische Analyse in dem nachfolgenden Datenanalysemodul beschrieben. Insgesamt ist es möglich, die Anzahl an Falschaussagen eines solchen Monitoring-Systems zu reduzieren.

Außerdem ist es mit obigen Ausführüngsbeispielen möglich, eine Verbesserung der Datenbasis zu erzielen. Besitzt eine erkannte Abweichung bestimmte charakteristische Eigenschaften, so kann jene korrigiert und interpoliert werden. Durch diese Verarbeitungsschritte gehen die für folgende Analysen notwendigen Informationen nicht verloren. Dies ermöglicht den Einsatz einer geringeren Anzahl von Monitoring-Knoten bzw. passiven Knoten bei gleichbleibender Aussagekraft der Analyseergebnisse. Hierbei ergibt sich eine einfache und preisgünstige Nachrüstbarkeit von passiven Monitoring-Systemen in ein bereits bestehende Funknetzwerk.

Außerdem ermöglichen oben beschriebene Ausführungsbeispiele die Erstellung einer Einschätzung zur Struktur des Monitoring-Systems. Neben der Erkennung positionsbedingter Abweichungen wurde beispielsweise bei obigen Ausführungsbeispielen, wie z. B. in dem Bewertungsmodul 70 von Fig. 6, die von dem passiven Knoten erfassten Daten auch kontinuierlich hinsichtlich der Qualität der Beobachtungsposition, d. h. der Position des passiven Knotens, untersucht. In dem Fall des Vorsehens dieser optionalen Zusatzbewertung ergibt sich ein Indikator zur Aussagekraft der empfangenen Messwerte bzw. des an dem passiven Knoten empfangenen Signals und damit auch der hieraus gewonnenen Bewertung der Kommunikation. Zusätzlich wird, wie es oben beschrieben worden ist, eine Ursachenanalyse bezüglich der Abweichungen ermöglicht, welche im Falle einer ungünstigen Beobachtungsposition praktische Handlungshinweise zur Umstrukturierung des Monitoring-Systems ermöglicht.

Insbesondere ermöglichen es obige Ausführungsbeispiele, die Anzahl der Monitoring-Knoten bzw. passiven Knoten gering zu halten. Ohne die Vorteile, wie sie obige Ausführungsbeispiele liefern, bestünde auch die Gefahr einer Überabdeckung des zu beobachtenden Netzwerks, bei der jeder Netzwerkknoten von mehreren passiven Knoten beobachtet werden würde. Außerdem ermöglichen oben beschriebene Ausführungsbeispiele, das zu beobachtende Netzwerk zu belassen wie es ist. Eine direkte Integration von Monitoring-Komponenten in jedem Funkknoten ist nicht notwendig. Eine solche Integration wäre auch mit steigender Anzahl von Netzwerkknoten sehr kostspielig und der Aufwand des Herausfilterns doppelt empfangener Messwerte sehr aufwändig.

Zudem sei bezüglich oben beschriebener Ausführungsbeispiele noch erwähnt, dass die dort als separater Prozess beschriebene Datenvorverarbeitung auch teilweise in einzelnen Bestandteilen in anderen Blöcken des Datenflusses durchgeführt werden könnten. So könnte die Erkennung von Abweichungen beispielsweise zumindest teilweise in dem Datenerfassungsmodul (vgl. Fig. 6) vorgenommen werden oder sogar zusätzlich oder alternativ zumindest teilweise in die Hardware des Empfängers bzw. passiven Knotens aufgenommen werden.

Insgesamt sind obige Ausführungsbeispiele zum passiven Monitoring von industriellen Funksystemen, drahtlosen Firmennetzwerken oder aber auch von Heimnetzwerken beim Endkunden, wie z. B. im Rahmen einer Zustandsanalyse oder Störungsdiagnose, einsetzbar. Mit der verstärkten Nutzung der lizenzfreien Frequenzbänder könnten oben beschriebene Ausführungsbeispiele Basis für ein funkstandardübergreifendes Frequenz-Management darstellen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (12) zur Bewertung einer Kommunikation zwischen einem ersten Knoten (14, A, STA) und einem zweiten Knoten (16, B, AP) eines Funkkommunikationssystems (18), die folgende Merkmale aufweist:
eine Vorrichtung (10) zum Erzeugen eines Signals (34), das eine Bewertungsbasis für die Bewertung der Kommunikation zwischen dem ersten Knoten (14, A, STA) und dem zweiten Knoten (16, B, AP) des Funkkommunikationssystems (18) enthält, anhand einer von einem in Reichweite des ersten Knotens zu positionierenden passiven Knoten (20) empfangenen ersten Version (22, L _{STA → Monitor}) eines von dem ersten Knoten (14, A, STA) an den zweiten Knoten (16, B, AP) gesendeten Funksignals (24, L_{STA} → _{Monitor}, L_{STA → AP}), die sich aufgrund einer Lageabweichung des passiven Knotens von dem zweiten Knoten von einer tatsächlich an dem zweiten Knoten empfangenen zweiten Version (26) unterscheidet, und
eine Einrichtung (28) zum Durchführen der Bewertung der Kommunikation zwischen dem ersten und dem zweiten Knoten anhand des Signals;
wobei die Vorrichtung zum Erzeugen des Signals (34)
eine Einrichtung (30, 62) zum Erkennen von Abweichungen der ersten Version des Funksignals von der von dem zweiten Knoten (16, B, AP) empfangenen zweiten Version (26) des Funksignals; und
eine Einrichtung (32) zum Erzeugen des Signals anhand der Abweichungen
aufweist; und
wobei die Einrichtung (30, 62) zum Erkennen ausgebildet ist, ohne Zugriff auf das gesendete Funksignal und die tatsächlich an dem zweiten Knoten empfangenen Version (26) die Abweichungen der ersten Version des Funksignals von der von dem zweiten Knoten (16, B, AP) empfangenen zweiten Version (26) des Funksignals zu erkennen, und zwar
durch Erkennung von in der ersten Version gegenüber der zweiten Version fehlenden Paketen durch Erkennen von Auslassungen in Sequenznummern in einer Abfolge von Paketen in der ersten Version und/oder
durch Erkennung von in der zweiten Version gegenüber der ersten Version fehlenden Paketen, die keine Sequenznummern verwenden, durch Überprüfung einer logischen Paketabfolge auf eine Protokollregelverletzung hin,
wobei die Einrichtung (32) zum Erzeugen ausgebildet ist, das die Bewertungsbasis enthaltende Signal durch Modifizieren der ersten Version des Funksignals anhand der Abweichungen und/oder durch Versehen derselben mit einer Zusatzinformation betreffend die Abweichungen zu erhalten, sodass die Bewertung anhand des Signals näher an dem liegt, wie sie anhand der von dem zweiten Knoten (16, B, AP) empfangenen zweiten Version 26 erhalten worden wäre.

2. Vorrichtung gemäß Anspruch 1, bei der die Einrichtung zum Erkennen ausgebildet ist, die Erkennung mittels Spektralanalyse, um Spektralinformationen zu erhalten, durchzuführen.

3. Vorrichtung gemäß Anspruch 1 oder 2, bei der die Einrichtung zum Erkennen ausgebildet ist, die Erkennung mittels Demodulation, um Paketinhalte zu erhalten, durchzuführen.

4. Vorrichtung gemäß einem der vorhergehenden Ansprüche, die ferner eine Einrichtung (64) zum Klassifizieren der Abweichungen aufweist, um eine Klassifizierung der Abweichungen zu erhalten, wobei die Einrichtung zum Erzeugen ausgebildet ist, um die Klassifizierung der Abweichungen bei der Modifizierung und/oder dem Versehen zu verwenden.

5. Vorrichtung gemäß Anspruch 4, bei der die Einrichtung zum Klassifizieren ausgebildet ist, um die Klassifizierung mittels einer Auswertung von gemäß einer Vorwärtsfehlerkorrektur der ersten Version fehlerhaften Abschnitten der ersten Version durchzuführen.

6. Vorrichtung gemäß Anspruch 4 oder 5, wobei die Klassifikation zwischen Klassen unterscheidet, die eine oder mehrere der folgenden Klassen aufweist:
ein in der ersten Version empfangenes und in der zweiten Version fehlendes Paket,
ein in der zweiten Version empfangenes und in der ersten Version fehlendes Paket,
eine Häufigkeit, mit welcher ein Paket in einem der ersten und zweiten Versionen nicht aber in der anderen der ersten und zweiten Versionen vorhanden ist,
eine Zuordnung zu einer Abweichungsursache aus einer Mehrzahl von Abweichungsursachen.

7. Vorrichtung gemäß einem der vorhergehenden Ansprüche, bei der die Einrichtung (30) zum Erzeugen ausgebildet ist, um im Rahmen der Modifizierung erste Anteile der ersten Version, die gemäß den Abweichungen gegenüber der zweiten Version falsch empfangen wurden, einer Korrektur zu unterziehen.

8. Vorrichtung gemäß Anspruch 7, bei der die Einrichtung zum Erzeugen ausgebildet ist, um im Rahmen der Korrektur ein fehlerhaft empfangenes Paket in der ersten Version mittels einer Auswertung von zuvor fehlerfrei empfangenen Paketen in der ersten Version zu transformieren.

9. Vorrichtung gemäß einem der vorhergehenden Ansprüche, bei der die Einrichtung zum Erzeugen ausgebildet ist, um im Rahmen der Modifizierung der ersten Version stellvertretend für zweite Anteile der ersten Version, die gemäß den Abweichungen gegenüber der zweiten Version fehlen, durch Interpolation eine rekonstruierte Version des zweiten Anteils in die erste Version einzufügen.

10. Vorrichtung gemäß Anspruch 9, bei der die Einrichtung zum Erzeugen ausgebildet ist, um die rekonstruierte Version des zweiten Anteils unbeachtet einer Richtigkeit von Nutzdaten des gesendeten Signals zu erzeugen.

11. Vorrichtung gemäß Anspruch 8 oder 9, bei der die Einrichtung zum Erzeugen ausgebildet ist, um die Einfügung zeitlich zu Zeitpunkten durchzuführen, die mittels vorbestimmter Regeln ausgewählt sind, um Uneindeutigkeiten der Zeitpunkte auszugleichen.

12. Vorrichtung gemäß einem der vorhergehenden Ansprüche, bei der die Einrichtung zum Erzeugen so ausgebildet ist, dass das Signal eine Bewertungsbasis als Ersatz für die zweite Version zum Zwecke einer Bewertung einer Beobachtungsposition des passiven Knotens umfasst, und ausgebildet ist, um die Bewertung der Beobachtungsposition des passiven Knotens anhand der Abweichungen zu bestimmen.

13. Vorrichtung gemäß einem der vorhergehenden Ansprüche, die ausgebildet ist, um Funksignale von mehr als einem Knoten (14, 16) des Funkkommunikationsnetzwerkes auszuwerten.

14. Vorrichtung gemäß einem der vorhergehenden Ansprüche, die ausgebildet ist, um erste Versionen des Funksignals von mehr als einem passiven Knoten auszuwerten.

15. Vorrichtung gemäß einem der vorhergehenden Ansprüche,
wobei die Einrichtung zum Durchführen die Bewertung so durchführt, dass die Bewertung gegen zumindest manche Abweichungen der Bewertungsbasis von dem gesendeten Funksignal, welche Nutzdaten in dem gesendeten Funksignal betreffen, unempfindlich oder unempfindlicher als gegen Abweichungen, die Paketheader betreffen, ist, und
die Einrichtung zum Erzeugen, die ausgebildet ist die erste Version zu modifizieren und/oder mit einer Zusatzinformation zu versehen, ausgebildet ist, um im Rahmen der Modifizierung der ersten Version Anteile jenseits der Nutzdaten der ersten Version, die gemäß den Abweichungen gegenüber der zweiten Version falsch empfangen wurden, einer Korrektur zu unterziehen.

16. Verfahren zur Bewertung einer Kommunikation zwischen einem ersten Knoten (14, A, STA) und einem zweiten Knoten (16, B, AP) eines Funkkommunikationssystems (18), das folgende Schritte aufweist:
Erzeugen eines Signals (34), das eine Bewertungsbasis für die Bewertung der Kommunikation zwischen dem ersten Knoten (14, A, STA) und dem zweiten Knoten (16, B, AP) des Funkkommunikationssystems (18) enthält, anhand einer von einem in Reichweite des ersten Knotens zu positionierenden passiven Knoten (20) empfangenen ersten Version (22, L _{STA → Monitor}) eines von dem ersten Knoten (14, A, STA) an den zweiten Knoten (16, B, AP) gesendeten Funksignals (24, L_{STA → Monitor}, L _{STA → AP}) , die sich aufgrund einer Lageabweichung des passiven Knotens von dem zweiten Knoten von einer tatsächlich an dem zweiten Knoten empfangenen zweiten Version (26) unterscheidet, und
Bewerten der Kommunikation zwischen dem ersten und dem zweiten Knoten anhand des Signals,
wobei das Erzeugen des Signals (34) durch
Erkennen von Abweichungen der ersten Version des Funksignals von der von dem zweiten Knoten (16, B, AP) empfangenen zweiten Version (26) des Funksignals; und
Erzeugen des Signals anhand der Abweichungen
gekennzeichnet ist und
wobei das Erkennen ohne Zugriff auf das gesendete Funksignal und die tatsächlich an dem zweiten Knoten empfangenen Version (26) erfolgt, bei dem
die Erkennung in der ersten Version gegenüber der zweiten Version fehlenden Paketen durch Erkennen von Auslassungen in Sequenznummern in einer Abfolge von Paketen in der ersten Version erfolgt, und/oder
die Erkennung in der zweiten Version gegenüber der ersten Version fehlenden Paketen, die keine Sequenznummern verwenden, durch Überprüfung einer logischen Paketabfolge auf eine Protokollregelverletzung hin erfolgt;
wobei das Erzeugen des Signals eine Erhaltung des die Bewertungsbasis enthaltenden Signals durch Modifizieren der ersten Version des Funksignals anhand der Abweichungen und/oder durch Versehen derselben mit einer Zusatzinformation betreffend die Abweichungen umfasst, sodass die Bewertung anhand des Signals näher an dem liegt, wie sie anhand der von dem zweiten Knoten (16, B, AP) empfangenen zweiten Version 26 erhalten worden wäre.

17. Computerprogramm mit einem Programmcode zur Durchführung des Verfahrens nach Anspruch 16, wenn das Programm auf einem Computer abläuft.

## Claims

1. Apparatus (12) for evaluating a communication between a first node (14, A, STA) and a second node (16, B, AP) of a radio communication system (18), comprising:
an apparatus (10) for generating a signal (34) including an evaluation basis for the evaluation of the communication between the first node (14, A, STA) and the second node (16, B, AP) of the radio communication system (18) based on a first version (22, L _{STA → monitor}) of a radio signal (24, L _{STA → monitor, L STA → AP}) transmitted from the first node (14, A, STA) to the second node (16, B, AP) received by a passive node (20) that is to be positioned within the range of the first node, which differs from a second version (26) actually received at the second node due to a positional deviation of the passive node from the second node, and
means (28) for performing the evaluation of the communication between the first and second nodes based on the signal;
wherein the apparatus for generating the signal (34) comprises
means (30, 62) for detecting deviations of the first version of the radio signal from the second version (26) of the radio signal received from the second node (16, B, AP); and
means (32) for generating the signal based on the deviations
and
wherein the means (30, 62) for detecting is configured to detect, without access to the transmitted radio signal and the version (26) actually received at the second node, the deviations of the first version of the radio signal from the second version (26) of the radio signal received by the second node (16, B, AP), namely
by detecting packets missing in the first version compared to the second version by detecting omissions in sequence numbers in a sequence of packets in the first version and/or
by detecting packets missing in the second version compared to the first version, which do not use sequence numbers, by checking a logical packet sequence for a protocol rule violation,
wherein the means (32) for generating is configured to obtain the signal containing the evaluation basis by modifying the first version of the radio signal based on the deviations and/or by providing the same with additional information concerning the deviations, so that the evaluation based on the signal is closer to that which would have been obtained based on the second version 26 received from the second node (16, B, AP).

2. Apparatus according to claim 1, wherein the means for detecting is configured to perform the detection by spectral analysis to obtain spectral information.

3. Apparatus according to claim 1 or 2, wherein the means for detecting is configured to perform the detection by demodulation to obtain packet contents.

4. Apparatus according to any one of the preceding claims, further comprising means (64) for classifying the deviations to obtain a classification of the deviations, the means for generating being configured to use the classification of the deviations in the modification and/or the provision.

5. Apparatus according to claim 4, wherein the means for classifying is configured to perform the classification by evaluating portions of the first version that are defective according to a forward error correction of the first version.

6. Apparatus according to claim 4 or 5, wherein the classification distinguishes between classes comprising one or more of the following classes:
a packet received in the first version and missing in the second version,
a packet received in the second version and missing in the first version,
a frequency with which a packet is present in one of the first and second versions but not in the other one of the first and second versions,
an allocation to one deviation reason of a number of deviation reasons.

7. Apparatus according to any one of the preceding claims, wherein the means for generating (30) is configured to subject, in the course of the modification, first portions of the first version that have been received incorrectly according to the deviations from the second version, to a correction.

8. Apparatus according to claim 7, wherein the means for generating is configured to transform, in the course of the correction, an incorrectly received packet in the first version by means of evaluating packets previously received correctly in the first version.

9. Apparatus according to any one of the preceding claims, wherein the means for generating is configured to insert by interpolation, in the course of the modification of the first version, a reconstructed version of the second portion into the first version as a substitute for second portions of the first version that are missing with respect to the second version according to the deviations.

10. Apparatus according to claim 9, wherein the means for generating is configured to generate the reconstructed version of the second portion regardless of a correctness of payload data of the transmitted signal.

11. Apparatus according to claim 8 or 9, wherein the means for generating is configured to temporally perform the insertion at times selected by predetermined rules to compensate for ambiguities in the times.

12. Apparatus according to any one of the preceding claims, wherein the means for generating is configured such that the signal comprises an evaluation basis as a substitute for the second version for evaluating an observation position of the passive node and is configured to determine the evaluation of the observation position of the passive node based on the deviations.

13. Apparatus according to any one of the preceding claims that is configured to evaluate radio signals from more than one node (14, 16) of the radio communication network.

14. Apparatus according to any one of the preceding claims that is configured to evaluate first versions of the radio signal from more than one passive node.

15. Apparatus according to any one of the preceding claims,
wherein the means for performing performs the evaluation such that the evaluation is insensitive or more insensitive to at least some deviations of the evaluation basis from the transmitted radio signal concerning payload data in the transmitted radio signal than to deviations concerning packet headers, and
the means for generating, that is configured to modify the first version and/or to provide the same with additional information is configured to subject, in the course of the modification of the first version, portions beyond the payload data of the first version which have been incorrectly received in accordance with the deviations from the second version, to a correction.

16. Method for evaluating a communication between a first node (14, A, STA) and a second node (16, B, AP) of a radio communication system (18), comprising:
generating a signal (34) including an evaluation basis for the evaluation of the communication between the first node (14, A, STA) and the second node (16, B, AP) of the radio communication system (18) based on a first version (22, L _{STA → monitor}) of a radio signal (24, L _{STA → monitor}, _{L STA → AP}) transmitted from the first node (14, A, STA) to the second node (16, B, AP) received by a passive node (20) that is to be positioned within the range of the first node, which differs from a second version (26) actually received at the second node due to a positional deviation of the passive node from the second node, and
evaluating the communication between the first and second nodes based on the signal;
wherein generating the signal (34) is **characterized by**
detecting deviations of the first version of the radio signal from the second version (26) of the radio signal received from the second node (16, B, AP); and
generating the signal based on the deviations
and
wherein detecting takes place without access to the transmitted radio signal and the version (26) actually received at the second node, wherein
detecting packets missing in the first version compared to the second version takes place by detecting omissions in sequence numbers in a sequence of packets in the first version and/or
detecting packets missing in the second version compared to the first version, which do not use sequence numbers, takes place by checking a logical packet sequence for a protocol rule violation,
wherein generating the signal includes obtaining the signal containing the evaluation basis by modifying the first version of the radio signal based on the deviations and/or by providing the same with additional information concerning the deviations, so that the evaluation based on the signal is closer to that which would have been obtained based on the second version 26 received from the second node (16, B, AP).

17. Computer program with a program code for performing the method according to claim 16 when the program runs on a computer.

## Revendications

1. Dispositif (12) permettant d'évaluer une communication entre un premier noeud (14, A, STA) et un deuxième noeud (16, B, AP) d'un système de radiocommunication (18), qui présente les caractéristiques suivantes:
un dispositif (10) destiné à générer un signal (34) qui contient une base d'évaluation pour évaluer la communication entre le premier noeud (14, A, STA) et le deuxième noeud (16, B, AP) du système de radiocommunication (18), sur base d'une première version (22, L_{STA → Monitor}), reçue d'un noeud passif (20) à positionner à portée du premier noeud, d'un signal radio (24, L_{STA → Monitor} L_{STA → AP}) transmis du premier noeud (14, A, STA) au deuxième noeud (16, B, AP) qui diffère, du fait d'un écart de position du noeud passif par rapport au deuxième noeud, d'une deuxième version (26) effectivement reçue au deuxième noeud, et
un moyen (28) destiné à effectuer l'évaluation de la communication entre le premier et le deuxième noeud sur base du signal;
dans lequel le dispositif destiné à générer le signal (34) présente
un moyen (30, 62) destiné à détecter les écarts de la première version du signal radio par rapport à la deuxième version (26) du signal radio reçue du deuxième nœud (16, B, AP); et
un moyen (32) destiné à générer le signal sur base des écarts;
et
dans lequel le moyen (30, 62) destiné à détecter est conçu pour détecter, sans accès au signal radio transmis et à la version (26) effectivement reçue au niveau du deuxième nœud, les écarts de la première version du signal radio par rapport à la deuxième version reçue (26) du signal radio reçue au niveau du deuxième nœud (16, B, AP), et ce
en détectant les paquets manquants dans la première version par rapport à la deuxième version, en détectant les omissions de numéros de séquence dans une succession de paquets dans la première version, et/ou
en détectant les paquets manquants dans la deuxième version par rapport à la première version qui n'utilisent pas de numéros de séquence, en vérifiant une succession logique de paquets en ce qui concerne une violation de règle de protocole,
dans lequel le moyen (32) destiné à générer est conçu pour obtenir le signal contenant la base d'évaluation en modifiant la première version du signal radio sur base des écarts et/ou en pourvoyant cette dernière d'une information additionnelle concernant les écarts, de sorte que l'évaluation sur base du signal se situe plus près de celle qui aurait été obtenue sur base de la deuxième version (26) reçue du deuxième noeud (16, B, AP).

2. Dispositif selon la revendication 1, dans lequel le moyen destiné à détecter est conçu pour effectuer la détection au moyen d'une analyse spectrale pour obtenir une information spectrale.

3. Dispositif selon la revendication 1 ou 2, dans lequel le moyen destiné à détecter est conçu pour effectuer la détection par démodulation pour obtenir les contenus de paquet.

4. Dispositif selon l'une des revendications précédentes, qui présente par ailleurs un moyen (64) destiné à classifier les écarts pour obtenir une classification des écarts, dans lequel le moyen destiné à générer est conçu pour utiliser la classification des écarts lors de la modification et/ou de l'action de pourvoir.

5. Dispositif selon la revendication 4, dans lequel le moyen destiné à classifier est conçu pour effectuer la classification au moyen d'une évaluation des segments manquants de la première version selon une correction d'erreur directe de la première version.

6. Dispositif selon la revendication 4 ou 5, dans lequel la classification distingue entre les classes qui présentent une ou plusieurs des classes suivantes:
un paquet reçu dans la première version et manquant dans la deuxième version,
un paquet reçu dans la deuxième version et manquant dans la première version,
une fréquence à laquelle un paquet n'est pas présent dans l'une des première et deuxième versions, mais est présent dans l'autre des première et deuxième versions,
une attribution à une cause d'écart parmi une pluralité de causes d'écart.

7. Dispositif selon l'une des revendications précédentes, dans lequel le moyen (30) destiné à générer est conçu pour soumettre à une correction, dans le cadre de la modification, des premières parts de la première version qui ont été mal reçues selon les écarts par rapport à la deuxième version.

8. Dispositif selon la revendication 7, dans lequel le moyen destiné à générer est conçu pour transformer, dans le cadre de la correction, un paquet mal reçu dans la première version au moyen d'une évaluation de paquets reçus auparavant sans erreur dans la première version.

9. Dispositif selon l'une des revendications précédentes, dans lequel le moyen destiné à générer est conçu pour insérer par interpolation, dans le cadre de la modification de la première version, en lieu et place des deuxièmes parts de la première version qui manquent selon les écarts par rapport à la deuxième version, une version reconstruite de la deuxième part dans la première version.

10. Dispositif selon la revendication 9, dans lequel le moyen destiné à générer est conçu pour générer la version reconstruite de la deuxième part quelle que soit l'exactitude des données utiles du signal transmis.

11. Dispositif selon la revendication 8 ou 9, dans lequel le moyen destiné à générer est conçu pour effectuer l'insertion dans le temps à des moments qui sont sélectionnés au moyen de règles prédéterminées pour compenser les ambiguïtés des moments.

12. Dispositif selon l'une des revendications précédentes, dans lequel le moyen destiné à générer est conçu de sorte que le signal comporte une base d'évaluation comme remplacement de la deuxième version aux fins d'une évaluation d'une position d'observation du noeud passif, et est conçu pour déterminer l'évaluation de la position d'observation du noeud passif à l'aide des écarts.

13. Dispositif selon l'une des revendications précédentes, qui est conçu pour évaluer des signaux radio provenant de plus d'un noeud (14, 16) du réseau de radiocommunication.

14. Dispositif selon l'une des revendications précédentes, qui est conçu pour évaluer des premières versions du signal radio provenant de plus d'un noeud passif,

15. Dispositif selon l'une des revendications précédentes,
dans lequel le moyen destiné à effectuer effectue l'évaluation de sorte que l'évaluation soit insensible ou moins sensible à au moins certains écarts de la base d'évaluation par rapport au signal radio transmis qui concernent les données utiles dans le signal radio transmis, qu'aux écarts qui concernent les en-têtes de paquet, et
le moyen destiné à générer, qui est conçu pour modifier la première version et/ou pour la pourvoir d'une information additionnelle, est conçu pour soumettre à une correction, dans le cadre de la modification de la première version, les parts au-delà des données utiles de la première version qui ont été reçues de manière incorrecte selon les écarts par rapport à la deuxième version.

16. Procédé d'évaluation d'une communication entre un premier noeud (14, A, STA) et un deuxième noeud (16, B, AP) d'un système de radiocommunication (18), qui comporte les étapes suivantes consistant à:
générer un signal (34) qui contient une base d'évaluation pour l'évaluation de la communication entre le premier noeud (14, A, STA) et le deuxième noeud (16, B, AP) du système de radiocommunication (18), sur base d'une première version (22, L_{STA → Monitor}), reçue d'un noeud passif (20) à positionner à portée du premier noeud, d'un signal radio (24, L_{STA → Monitor} L_{STA → AP}) transmis du premier noeud (14, A, STA) au deuxième noeud (16, B, AP) qui diffère, du fait d'un écart de position du noeud passif par rapport au deuxième noeud, d'une deuxième version (26) effectivement reçue au deuxième noeud, et
évaluer la communication entre le premier et le deuxième noeud sur base du signal,
dans lequel la génération du signal (34) est **caractérisée par** le fait de
détecter les écarts de la première version du signal radio par rapport à la deuxième version (26) du signal radio reçue du deuxième noeud (16, B, AP); et
générer le signal à l'aide des écarts,
et
dans lequel la détection a lieu sans accès au signal radio émis et à la version (26) effectivement reçue au niveau du deuxième noeud, dans lequel
la détection de paquets manquants dans la première version par rapport à la deuxième version a lieu en détectant des omissions dans des numéros de séquence dans une succession de paquets dans la première version, et/ou
la détection de paquets manquants dans la deuxième version par rapport à la première version qui n'utilisent pas de numéros de séquence a lieu en vérifiant une succession logique de paquets en ce qui concerne une violation de règle de protocole;
dans lequel la génération du signal comporte le fait d'obtenir le signal contenant la base d'évaluation en modifiant la première version du signal radio sur base des écarts et/ou en pourvoyant cette dernière d'une information additionnelle concernant les écarts de sorte que l'évaluation sur base du signal se situe plus près de celle qui aurait été obtenue sur base de la deuxième version (26) reçue du deuxième noeud (16, B, AP).

17. Programme informatique avec un code de programme pour mettre en oeuvre le procédé selon la revendication 16 lorsque le programme est exécuté sur un ordinateur.
